# EUROPEAN PATENT APPLICATION

(11) **EP 4 350 833 A1**
(43) Date of publication of application: **10.04.2024**
(21) Application number: 22810653.0
(22) Date of filing: 27.05.2022
(51) Int. Cl.: H01M 10/0567

(54) **ELECTROLYTE, ELECTROCHEMICAL DEVICE THEREOF, AND ELECTRONIC DEVICE**

(30) Priority: 28.05.2021 CN 202110592885
(71) Applicant: AESC Japan Ltd., Kanagawa, 2520012 (JP)
(72) Inventor: WANG, Renhe, Shanghai 200120 (CN); WANG, Ziyuan, Shanghai 200120 (CN); YU, Le, Shanghai 200120 (CN)
(74) Representative: Becker, Eberhard
(86) International application number: PCT/CN2022/095586
(87) International publication number: WO 2022/247929

(57) **Abstract**

An electrolyte, an electrochemical device thereof, and an electronic device. The electrolyte comprises a compound as shown in formula (I), in which R₁, R₃ and R₄ are each independently selected from among hydrogen, a cyano group, a substituted or unsubstituted C₁₋₁₂ alkyl group, a substituted or unsubstituted C₁₋₁₂ carbonyl group, a substituted or unsubstituted C₆₋₂₆ aryl group, a substituted or unsubstituted C₂₋₁₂ amide group, a substituted or unsubstituted C₀₋₁₂ phosphate group, a substituted or unsubstituted C₀₋₁₂ sulfonyl group, a substituted or unsubstituted C₀₋₁₂ siloxy group, and a substituted or unsubstituted C₀₋₁₂ boric acid ester group. When substituted, the substituent group comprises a halogen atom. The present electrolyte can improve the high-temperature and room-temperature cyclic performance of an electrochemical device as well as reduce the internal resistance of the electrochemical device.

## Description

### BACKGROUND

### Technical Field

The embodiments of the present disclosure relate to the technical field of electrolytes, for example, to an electrolyte and an electrochemical device thereof and an electronic device.

### Description of Related Art

With important advantages such as high voltage and high capacity, long cycle life and good safety performance, lithium-ion batteries have broad application prospects in portable electronic devices, electric vehicles, space technology, and defense industries.

Electrolyte is the "blood" of lithium batteries, one of the four essential raw materials of lithium batteries, and serves as the carrier of ion transport in the battery. Electrolyte serves the function of conducting lithium ions between the positive and negative electrodes, and therefore has important effects on the energy density, specific capacity, operating temperature range, cycle life, safety performance, etc. of lithium batteries.

However, the commonly adopted negative electrode film-forming additives such as VC have the characteristics of high internal resistance while producing a protection effect, so it is difficult to achieve the characteristics of high-temperature cycle performance and room-temperature cycle performance and low resistance.

### SUMMARY

The following is an overview of the theme detailed in this disclosure. This summary is not intended to limit the scope to be protected by the claims.

An embodiment of the present disclosure provides an electrolyte and an electrochemical device thereof, and an electronic device. The electrochemical device made from the electrolyte of the present disclosure has excellent high-temperature cycle performance and room-temperature cycle performance, as well as low internal resistance.

In the first aspect, an embodiment of the present disclosure provides an electrolyte, and an embodiment of the present disclosure adopts the following technical solutions:

An electrolyte includes the compound represented by formula (I):

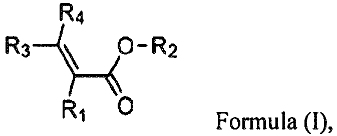

In the formula, R₁, R₃, and R₄ are each independently selected from hydrogen, a cyano group, a substituted or unsubstituted C₁₋₁₂ hydrocarbon group, a substituted or unsubstituted C₁₋₁₂ carboxy group, a substituted or unsubstituted C₆₋₂₆ aryl group, a substituted or unsubstituted C₂₋₁₂ amide group, a substituted or unsubstituted C₀₋₁₂ phosphate group, a substituted or unsubstituted C₀₋₁₂ sulfonyl group, a substituted or unsubstituted C₀₋₁₂ siloxy group or a substituted or unsubstituted C₀₋₁₂ boronate group, when being substituted, a substituent comprises a halogen atom; R₂ is selected from the substituted or unsubstituted C₁₋₁₂ hydrocarbon group, the substituted or unsubstituted C₁₋₁₂ carboxy group, the substituted or unsubstituted C₆₋₂₆ aryl group, the substituted or unsubstituted C₂₋₁₂ amide group, the substituted or unsubstituted C₀₋₁₂ phosphate group, the substituted or unsubstituted C₀₋₁₂ sulfonyl group, the substituted or unsubstituted C₀₋₁₂ siloxy group or the substituted or unsubstituted C₀₋₁₂ boronate group, when being substituted, the substituent comprises the halogen atom.

Here, for description, the C₁₋₁₂ hydrocarbon group refers to a hydrocarbon group containing 1 to 12 carbon atoms.

By adding the compound represented by the formula (I), the electrolyte of the present disclosure is able to improve the formation of negative electrode film, achieve the effects of reducing the amount of additive for forming the negative electrode film, and improve the internal resistance. The electrochemical device made of the electrolyte of the present disclosure has excellent high-temperature cycle performance and room-temperature cycle performance, and has low internal resistance.

In the present disclosure, based on the mass of the electrolyte, the mass content of the compound represented by the formula (I) is 0.1% to 5%, for example, 0.1%, 0.2%, 0.3%, 0.4%, 0.5%, 0.6% %, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3%, 3.1%, 3.2%, 3.3%, 3.4%, 3.5%, 3.6%, 3.7%, 3.8%, 3.9% , 4%, 4.1%, 4.2%, 4.3%, 4.4%, 4.5%, 4.6%, 4.7%, 4.8%, 4.9% or 5%, etc. If the amount of the compound represented by the formula (I) is too small and less than 0.1%, the film-forming effect will not be apparent; if the amount of the compound represented by the formula (I) is too large and more than 5%, the impedance will increase dramatically.

In a preferred solution, based on the mass of the electrolyte, the mass content of the compound represented by the formula (I) is 0.3% to 3%.

In the disclosure, the carboxy group includes one of ether group, ester group and carbonyl group.

In a preferred embodiment of the present disclosure, R₁, R₃ and R₄ are each independently selected from hydrogen, and the substituted or unsubstituted C₁₋₁₂ hydrocarbon group; in a preferred embodiment, R₂ is selected from the substituted or unsubstituted C₁₋₁₂ hydrocarbon group.

In a preferred embodiment, the compound represented by the formula (I) is any one or a mixture of two or more of dimethyl fumarate ( 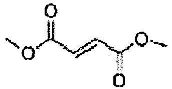 ), methyl methacrylate ( 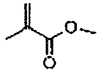 ), dimethyl maleate ( 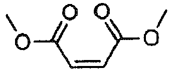 ), 1,1,1,3,3,3-hexafluoroisopropyl methacrylate ( 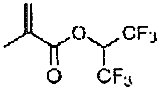 ), and vinyl methacrylate ( 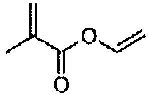 ). A typical but non-limiting combination of the mixture is a mixture of two, three, four or five compounds, such as a mixture of dimethyl fumarate and methyl methacrylate, a mixture of dimethyl fumarate and dimethyl maleate, a mixture of dimethyl fumarate and 1,1,1,3,3,3-hexafluoroisopropyl methacrylate, a mixture of dimethyl fumarate and vinyl methacrylate, a mixture of dimethyl fumarate, methyl methacrylate, and dimethyl maleate, a mixture of dimethyl fumarate, methyl methacrylate, and 1,1,1,3,3,3-hexafluoroisopropyl methacrylate, a mixture of dimethyl fumarate, methyl methacrylate, and vinyl methacrylate, a mixture of methyl methacrylate, dimethyl maleate, and 1,1,1,3,3,3-hexafluoroisopropyl methacrylate, a mixture of methyl methacrylate, dimethyl maleate, and vinyl methacrylate, a mixture of dimethyl maleate, 1,1,1,3,3,3-hexafluoroisopropyl methacrylate, and vinyl methacrylate, a mixture of dimethyl fumarate, methyl methacrylate, dimethyl maleate, and 1,1,1,3,3,3-hexafluoroisopropyl methacrylate, a mixture of dimethyl fumarate, methyl methacrylate, dimethyl maleate, and vinyl methacrylate, a mixture of methyl methacrylate, dimethyl maleate, 1,1,1,3,3,3-hexafluoroisopropyl methacrylate, and vinyl methacrylate, and a mixture of dimethyl fumarate, methyl methacrylate, dimethyl maleate, 1,1,1,3,3,3-hexafluoroisopropyl methacrylate, and vinyl methacrylate.

In the present disclosure, the electrolyte is chemically formed in an environment with a temperature of 45°C and a hot-pressing pressure of 0.1 MPa to generate HF. Based on the mass of the electrolyte after the formation, the mass content of the generated HF is 20 ppm to 800 ppm, for example, the mass content of the HF is 20 ppm, 30 ppm, 40 ppm, 50 ppm, 60 ppm, 70 ppm, 80 ppm, 90 ppm, 100 ppm, 110 ppm, 120 ppm, 130 ppm, 140 ppm, 150 ppm, 160 ppm, 170 ppm, 180 ppm, 190 ppm, 200 ppm, 250 ppm, 300 ppm, 350 ppm, 400 ppm, 450 ppm , 500 ppm, 550 ppm, 600 ppm, 650 ppm, 700 ppm, 750 ppm, 800 ppm, etc. A trace amount of HF is used as a reaction initiator. If the amount of HF is too large and more than 800 ppm, the cycle performance of the electrochemical device will be poor and the impedance will increase. Therefore, after the compound represented by the formula (I) is formed into a film, the acidification of the electrolyte may be suppressed, thereby improving the cycle performance of the electrochemical device.

In a second aspect, an embodiment of the present disclosure provides an electrochemical device, including a negative electrode, a positive electrode, and the electrolyte described in the first aspect.

The electrochemical device of the present disclosure includes any device in which an electrochemical reaction occurs, and specific examples thereof include all kinds of primary batteries, secondary batteries, fuel cells, solar cells, or capacitors. In particular, the electrochemical device is a lithium secondary battery, including a lithium metal secondary battery, a lithium ion secondary battery, a lithium polymer secondary battery, or a lithium ion polymer secondary battery.

In some embodiments, the electrochemical device of the present disclosure is an electrochemical device having a positive electrode having a positive electrode active material capable of occluding and releasing metal ions, and a negative electrode having a negative electrode active material capable of occluding and releasing metal ions.

The negative electrode includes a negative electrode active material and a current collector, and the negative electrode active material includes a graphite or silicon carbon negative electrode active material.

The silicon carbon negative electrode active material is selected from any one or a mixture of two or more of silicon, silicon oxide compounds and silicon-based alloys.

The negative electrode further includes a carbon material, and the carbon material is selected from any one or a mixture of two or more of acetylene black, conductive carbon black, carbon fiber, carbon nanotube and Ketjen black.

In the present disclosure, the porosity of the negative electrode is 20% to 40%, for example, 20%, 21 %, 22%, 23%, 24%, 25%, 26%, 27%, 28%, 29%, 30% %, 31%, 32%, 33%, 34%, 35%, 36%, 37%, 38%, 39%, 40%, etc. If the porosity of the negative electrode is too low and less than 20%, the impedance will be large, and the cycle performance will be affected. If the porosity of the negative electrode is too high and higher than 40%, the electrode will become thick, the side reactions will increase, the cycle performance and capacity retention performance will be affected.

The porosity of a negative electrode or a positive electrode described herein refers to the porosity of a negative electrode sheet or a positive electrode sheet. The calculation formula of the porosity of the electrode sheet is: porosity=1-(compacted density/true density).

The positive electrode includes a positive electrode active material, and the positive electrode active material is selected from any one or a mixture of two or more of lithium iron phosphate, a lithium-nickel transition metal composite oxide, and a lithium-nickel-manganese composite oxide having a spinel structure.

The electrochemical device further includes a positive electrode, and the porosity of the positive electrode is 20% to 35%, such as 20%, 21%, 22%, 23%, 24%, 25%, 26%, 27%, 28%, 29%, 30%, 31%, 32%, 33%, 34%, 35%, etc. If the porosity of the positive electrode is too low and less than 20%, the impedance will be large, and the cycle performance will be affected. If the porosity of the positive electrode is too high and higher than 35%, the electrode will become thick, the side reactions will increase, the cycle performance and capacity retention performance will be affected.

The lithium iron phosphate is nanolithium iron phosphate or lithium iron phosphate secondary sphere.

The Dv50 particle size of the nanolithium iron phosphate is 0.8 µm to 2.5 µm, such as 0.8 µm, 0.9 µm, 1 µm, 1.1 µm, 1.2 µm, 1.3 µm, 1.4 µm, 1.5 µm, 1.6 µm, 1.7 µm, 1.8 µm, 1.9 µm, 2 µm, 2.1 µm, 2.2 µm, 2.3 µm, 2.4 µm, 2.5 µm, etc., where Dv50 is the particle size corresponding to a cumulative volume percentage of the positive electrode active material reaching 50%. The Dv50 of the positive electrode active material may be tested by a Malvern 3000 laser particle size analyzer, and the average value of the three tests is the test result.

The Dv50 particle size of the lithium iron phosphate secondary sphere is 7 µm to 11 µm, for example, 7 µm, 8 µm, 9 µm, 10 µm, 11 µm and the like.

The general formula of the lithium-nickel transition metal composite oxide is Li₁₊ₐNiₓCo_{y}Mn_{z}M_{b}O₂₋ₑXₑ. In the general formula, -0.2<a<0.2, 0.3≤x≤0.95, 0.05≤y≤0.3, 0.03≤z≤0.4, 0≤b≤0.05, 0≤e≤0.1, M is selected from any one or a combination of two or more of Al, Ti, Zr, Nb, Sr, Sc, Sb, Y, Ba, Co, and Mn, and X is selected from F and/or Cl. It should be noted that the general chemical formula of the lithium-nickel transition metal composite oxide is the chemical formula when the SOC (State of Charge) of the battery is 0%.

In a third aspect, an embodiment of the present disclosure provides an electronic device, where the electronic device includes the electrochemical device described in the second aspect.

The electronic device includes but is not limited to the following types, such as notebook computers, pen input computers, mobile computers, e-book players, portable telephones, portable fax machines, portable copiers, portable printers, headsets, video recorders, liquid crystals TVs, portable cleaners, portable CD players, mini-discs, transceivers, electronic notepads, calculators, memory cards, portable recorders, radios, backup power supplies, motors, automobiles, motorcycles, assisted bicycles, bicycles, lighting equipment, toys, game consoles, clocks, power tools, flashlights, cameras, large household batteries or lithium-ion capacitors, etc.

Compared with the related art, the advantageous effects of the embodiments of the present disclosure are:

By adding the compound represented by formula (I) to the electrolyte of the embodiments of the present disclosure, the high-temperature cycle performance and room-temperature cycle performance of the electrochemical device may be improved, and the internal resistance of the electrochemical device may be reduced at the same time.

Other aspects will clearer upon reading and understanding the detailed description.

### DESCRIPTION OF THE EMBODIMENTS

The technical solutions of the present disclosure are further described below through specific embodiments.

Unless otherwise specified, various raw materials of the present disclosure can be purchased commercially or prepared according to conventional methods in the art.

The electrolyte of the present disclosure includes the compound represented by formula (I):

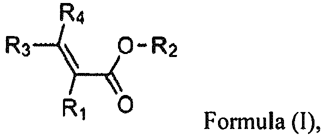

In the formula, R₁, R₃, and R₄ are each independently selected from hydrogen, a cyano group, a substituted or unsubstituted C₁₋₁₂ hydrocarbon group, a substituted or unsubstituted C₁₋₁₂ carboxy group, a substituted or unsubstituted C₆₋₂₆ aryl group, a substituted or unsubstituted C₂₋₁₂ amide group, a substituted or unsubstituted C₀₋₁₂ phosphate group, a substituted or unsubstituted C₀₋₁₂ sulfonyl group, a substituted or unsubstituted C₀₋₁₂ siloxy group or a substituted or unsubstituted C₀₋₁₂ boronate group, when being substituted, a substituent comprises a halogen atom; R₂ is selected from the substituted or unsubstituted C₁₋₁₂ hydrocarbon group, the substituted or unsubstituted C₁₋₁₂ carboxy group, the substituted or unsubstituted C₆₋₂₆ aryl group, the substituted or unsubstituted C₂₋₁₂ amide group, the substituted or unsubstituted C₀₋₁₂ phosphate group, the substituted or unsubstituted C₀₋₁₂ sulfonyl group, the substituted or unsubstituted C₀₋₁₂ siloxy group or the substituted or unsubstituted C₀₋₁₂ boronate group, when being substituted, the substituent comprises the halogen atom.

In this disclosure, the electrochemical device is a lithium ion battery, and the lithium ion battery is a primary lithium battery or a secondary lithium battery, including: a positive electrode, a negative electrode, a separator film between the positive electrode and the negative electrode, and an electrolyte.

The preparation method of the secondary lithium battery of the present disclosure is as follows:
(1) Preparation of LFP (LiFePO₄) positive electrode:
   After mixing the positive electrode active material (LiFePO₄), polyvinylidene fluoride as a binder, and Super P as a conductive agent in a weight ratio of 97:2:1, N-methylpyrrolidone (NMP) is added. The above mixture is stirred under the action of a vacuum mixer until the system is uniform and transparent to obtain a positive electrode slurry. The positive electrode slurry is evenly coated on an aluminum foil; the aluminum foil is dried at room temperature and then transferred to an oven for drying, and then cold-pressed and cut to obtain a positive electrode (electrode sheet).
(2) Preparation of 811 (LiNi_{0.8}Co_{0.1}Mn_{0.1}O₂) positive electrode:
   After mixing the positive electrode active material (LiNi_{0.8}Co_{0.1}Mn_{0.1}O₂), polyvinylidene fluoride as a binder, and Super P as a conductive agent in a weight ratio of 98:1:1, N-methylpyrrolidone (NMP) is added. The above mixture is stirred under the action of a vacuum mixer until the system is uniform and transparent to obtain a positive electrode slurry. The positive electrode slurry is evenly coated on an aluminum foil; the aluminum foil is dried at room temperature and then transferred to an oven for drying, and then cold-pressed and cut to obtain a positive electrode (electrode sheet).
(3) Preparation of graphite negative electrode:
   Artificial graphite used as a negative electrode active material, Super P used as a conductive agent, sodium carboxymethyl cellulose (CMC-Na) used as a thickener, and styrenebutadiene rubber (SBR) used as a binder are mixed in a mass ratio of 96:1:1: 2, deionized water is added thereto to obtain a negative electrode slurry under the action of vacuum mixer. The negative electrode slurry is evenly coated on the negative electrode current collector copper foil; the copper foil is dried at room temperature and then transferred to an oven for drying, and then cold-pressed and cut to obtain a negative electrode (electrode sheet).
(4) Preparation of silicon oxide negative electrode:
   Silica and artificial graphite are mixed in a mass ratio of 1:9 as a negative electrode active material, and mixed with SWCNT as a conductive agent and polyacrylic acid (PAA) as a binder in a mass ratio of 96:0.2:3.8, and deionized water is added to obtain a negative electrode slurry under the action of a vacuum mixer. The negative electrode slurry is uniformly coated on the negative electrode current collector copper foil. The copper foil is dried at room temperature and then transferred to an oven for drying, and then cold-pressed and cut to obtain a negative electrode (electrode sheet).
(5) Preparation of electrolyte:
   In an argon atmosphere glove box with a water content of <10 ppm, battery-grade ethylene carbonate (EC) and ethyl methyl carbonate (EMC) are mixed at a mass ratio of 3:7 to form an organic solvent. According to the composition of the electrolyte described in the table below, other components are quantitatively added and mixed uniformly to obtain an electrolyte. In the table, each component content is the weight percentage calculated based on the total weight of the electrolyte.
(6) Preparation of separator film:
   Polypropylene film is used as a separator film.
(7) Preparation of secondary battery:
   A polypropylene film (PP) with a thickness of 12 µm is used as a separator film, and the positive electrode, separator film and negative electrode prepared as above are laminated in sequence, so that the separator film is placed between the positive electrode and the negative electrode to separate them. Then an aluminum plastic film is used for wrapping, and the wrap is transferred to a vacuum oven for drying at 120°C, then 3.0 g/Ah of the electrolyte prepared as above is injected and sealed to carry out formation of electrolyte. Finally, a soft-pack battery (i.e., lithium-ion battery) with a capacity of 1Ah is prepared.

The formation conditions of the electrolyte in the ternary cell and the iron-lithium cell involved in the present disclosure are as follows, respectively.

The specific steps for the formation of the electrolyte in the ternary cell are as follows: after the electrolyte is injected, a hot-pressing environment of 0.1 MPa is maintained, charging is performed to charge the ternary cell to 3.05 V at 0.02 C at 45°C in a static state, and leave the ternary cell static for 30 minutes and charge the ternary cell to 3.4 V at 0.05 C, and then charge the ternary cell again to 3.75 V at 0.1 C after leaving the ternary cell static for 30 min. After that, the air bag is cut off and vacuum-sealed, and standing at room temperature for 48 hours to complete the formation of the electrolyte.

The specific steps for the formation of the electrolyte in the iron lithium battery are as follows: after the electrolyte is injected, a hot-pressing environment of 0.1 MPa is maintained, charging is performed to charge the iron lithium battery at 0.02 C at 45°C for 17 minutes in a static state, and leave the iron lithium battery static for 5 minutes and charge the iron lithium battery to 0.3 Ah at 0.02 C. After that, the air bag is cut off and vacuum-sealed, and standing at room temperature for 48 hours to complete the formation of the electrolyte.

In the examples of the disclosure, the following five compounds are adopted as the compounds represented by formula (I), compound 1 is methyl methacrylate, compound 2 is dimethyl fumarate, compound 3 is dimethyl maleate ester, compound 4 is 1,1,1,3,3,3-hexafluoroisopropyl methacrylate, and compound 5 is vinyl methacrylate.

The secondary battery of the present disclosure may be tested by the following methods:

### 1. Secondary battery cycle test

In an oven at a specified temperature (room temperature 25°C or high temperature 45°C), cycle charging and discharging are performed with a current of 1 C within a specified potential range, and the discharge capacity of each cycle is recorded. The test is ended when the battery capacity drops to 80% of the capacity in the first cycle.

### 2. Secondary battery DC resistance (DCR) test

At a specified temperature, when the battery is discharged to 50% SOC (state of charge, reflecting the remaining capacity of the battery) at a current of 1 C, the current is increased to 4 C, and maintained for 30 seconds. The difference between the updated stable voltage and the original platform voltage is detected, and a ratio of the above difference to the 3 C current value is a DC resistance of the battery. The DCR test result performed after the battery is fully charged for the first time is the initial DCR of the battery.

### 3. High-temperature storage capacity retention test of secondary battery

After the secondary battery is fully charged, the secondary battery is placed in a constant temperature box at 60°C, taken out after 30 days, and discharged to a cut-off voltage at a rate of 0.33C after cooling to room temperature, and comparison is made between the percentage of capacity of the secondary battery relative to the initial discharge capacity.

The cut-off voltage for charging and discharging is as follows:
LFP-Graphite is 2.5 V to 3.65 V, 811-Graphite is 2.8 V to 4.2 V, and 811-Silica is 2.8 V to 4.25 V.

The electrolyte composition of Examples 1 to 7 and Comparative Example 1 of the present disclosure are shown in Table 1-1. The lithium ion battery is prepared by the above preparation method, and the performance of the lithium ion battery is tested. The test results are shown in Table 1-2.

**Table 1-1**

| | Positive electrode | Negative electrode | Electrolyte (wt%) | | | | |
|---|---|---|---|---|---|---|---|
| | | | LiPF₆ (wt%) | Non-aqueous solvent (wt%) | Compound 1 | FEC | VC |
| Example 1 | LFP | Graphite | 14 | 83.4 | 0.1 | 0.5 | 2 |
| Example 2 | LFP | Graphite | 14 | 83.2 | 0.3 | 0.5 | 2 |
| Example 3 | LFP | Graphite | 14 | 82.5 | 1 | 0.5 | 2 |
| Example 4 | LFP | Graphite | 14 | 82.0 | 1.5 | 0.5 | 2 |
| Example 5 | LFP | Graphite | 14 | 84.5 | 3 | 0.5 | 2 |
| Example 6 | LFP | Graphite | 14 | 79.5 | 4 | 0.5 | 2 |
| Example 7 | LFP | Graphite | 14 | 78.5 | 5 | 0.5 | 2 |
| Comparative Example 1 | LFP | Graphite | 14 | 83.5 | - | 0.5 | 2 |

| | | | | | | | |
|---|---|---|---|---|---|---|---|
| Note: "-" means the compound is not added, and the same applies to the tables below. | | | | | | | |

**Table 1-2**

| | Number of cycle (dropping to 80% capacity) at room temperature | Number of cycle (dropping to 80% capacity) at high temperature | Initial DCR /mOhm | Capacity retention rate after storage at 60°C for 30 days/% |
|---|---|---|---|---|
| Example 1 | 1021 | 887 | 109 | 94 |
| Example 2 | 1250 | 1119 | 105 | 95 |
| Example 3 | 1826 | 1607 | 99 | 96 |
| Example 4 | 2023 | 1810 | 98 | 98 |
| Example 5 | 1839 | 1656 | 104 | 98 |
| Example 6 | 1604 | 1370 | 107 | 94 |
| Example 7 | 1021 | 910 | 109 | 91 |
| Comparative Example 1 | 1003 | 883 | 109 | 94 |

As can be seen from the data in Table 1-2, when the positive electrode adopts lithium iron phosphate, and the negative electrode adopts graphite, as compared with Comparative Example 1 where the compound represented by formula (I) is not added, since the electrolyte of the present disclosure is added with the compound represented by formula (I), when the addition amount of the compound is 0.1 to 5%, the number of cycle (dropping to 80% capacity) at room temperature of Example 1 to Example 7 is 1021 to 2023, the number of cycle (dropping to 80% capacity) at high temperature is 887 to 1810, the initial DCR is 98 to 109 mOhm (milliohm), and the capacity retention rate after storage of 30 days at 60°C is 91% to 98%. The test results of Example 1 to Example 7 are better than Comparative Example 1 by varying degrees. Especially when the compound represented by the formula (I) is added in an amount of 0.3% to 4%, the number of cycle (dropping to 80% capacity) at room temperature of Examples 2-5 is 1250 to 2023, and the number of cycle (dropping to 80% capacity) at high temperature is 1119 to 1810. The initial DCR is 98 mOhm (milliohm) to 105 mOhm (milliohm), and the capacity retention rate after storage of 30 days at 60°C is 95% to 98%. The test results are significantly improved compared to the Comparative Example 1 without the addition of the compound. Electrochemical properties of the electrolyte have been improved. The applicant believes that the reason is that by adding the compound represented by the formula (I), the film formation on the negative electrode surface may be improved and the internal resistance may be optimized. The applicant further infers that the addition of the compound represented by the formula (I) may produce synergistic effect with electrode sheets, so that the lithium battery has better high-temperature cycle performance, room-temperature cycle performance, high-temperature storage performance, and achieves lower internal resistance.

The electrolyte compositions of Examples 8 to 10 of the present disclosure are shown in Table 2-1. The lithium ion battery is prepared by the above preparation method, and the performance of the lithium ion battery is tested. The test results are shown in Table 2-2.

**Table 2-1**

| | Positive electrode | Negative electrode | Electrolyte (wt%) | | | | | | | |
|---|---|---|---|---|---|---|---|---|---|---|
| | | | LiPF₆ (wt%) | Non-aqueous solvent (wt%) | Compound 1 | Compound 2 | Compound 3 | Compound 4 | FEC | VC |
| Example 3 | LFP | Graphite | 14 | 82.5 | 1 | - | - | - | 0.5 | 2 |
| Example 8 | LFP | Graphite | 14 | 82.5 | - | 1 | - | - | 0.5 | 2 |
| Example 9 | LFP | Graphite | 14 | 82.5 | - | - | 1 | - | 0.5 | 2 |
| Example 10 | LFP | Graphite | 14 | 82.5 | 0.5 | - | - | 0.5 | 0.5 | 2 |

**Table 2-2**

| | Number of cycle (dropping to 80% capacity) at room temperature | Number of cycle (dropping to 80% capacity) at high temperature | Initial DCR /mOhm | Capacity retention rate after storage at 60°C for 30 days/% |
|---|---|---|---|---|
| Example 3 | 1826 | 1607 | 99 | 96 |
| Example 8 | 1847 | 1693 | 98 | 95 |
| Example 9 | 1853 | 1729 | 99 | 95 |
| Example 10 | 1859 | 1606 | 99 | 97 |

It can be seen from the data in Table 2-2 that when the compounds represented by the formula (I) added to the electrolyte are in different combinations, the electrochemical device may have excellent high-temperature cycle performance, room-temperature cycle performance, high-temperature storage performance, and have lower internal resistance simultaneously.

### Example 11

The positive electrode material lithium iron phosphate in this example and Example 3 are both lithium iron phosphate secondary spheres. The only difference between the present example and Example 3 is that the Dv50 particle size of the lithium iron phosphate secondary sphere in this example is 7 µm, whereas the Dv50 particle size of the lithium iron phosphate secondary sphere in Example 3 is 9 µm, and the composition of the electrolyte and other compositions are the same as those in Example 3.

### Example 12

The positive electrode material lithium iron phosphate in this example and Example 3 are both lithium iron phosphate secondary spheres. The only difference between the present example and Example 3 is that the Dv50 particle size of the lithium iron phosphate secondary sphere in this example is 11 µm, whereas the Dv50 particle size of the lithium iron phosphate secondary sphere in Example 3 is 9 µm, and the composition of the electrolyte and other compositions are the same as those in Example 3.

The performance tests of the lithium ion batteries prepared in Examples 11 to 12 are carried out, and the test results are shown in Table 3-1.

**Table 3-1**

| | Number of cycle (dropping to 80% capacity) at room temperature | Number of cycle (dropping to 80% capacity) at high temperature | Initial DCR /mOhm | Capacity retention rate after storage at 60°C for 30 days/% |
|---|---|---|---|---|
| Example 11 | 1251 | 1531 | 98 | 94 |
| Example 3 | 1826 | 1607 | 99 | 96 |
| Example 12 | 1755 | 1611 | 104 | 97 |

Based on the data in Table 3-1, it can be seen that the negative electrode of the disclosure adopts graphite, the positive electrode adopts lithium iron phosphate secondary spheres, and the Dv50 particle size of the lithium iron phosphate secondary spheres is 7 µm to 11 µm, so that the synergistic effect between the compound in the electrolyte and the electrode sheet may be better realized. Therefore, the prepared battery has better high-temperature cycle performance, room-temperature cycle performance, high-temperature storage performance, and lower internal resistance.

### Example 13

The difference between the present example and Example 3 is that the positive electrode adopts nano-lithium iron phosphate, and the Dv50 particle size of the nano-lithium iron phosphate is 0.8 µm, and the electrolyte composition and other compositions are the same as those in Example 3.

### Example 14

The difference between the present example and Example 3 is that the positive electrode adopts nano-lithium iron phosphate, and the Dv50 particle size of the nano-lithium iron phosphate is 1.6 µm, and the electrolyte composition and other compositions are the same as those in Example 3.

### Example 15

The difference between the present example and Example 3 is that the positive electrode adopts nano-lithium iron phosphate, and the Dv50 particle size of the nano-lithium iron phosphate is 2.5 µm, and the electrolyte composition and other compositions are the same as those in Example 3.

The performance tests of the lithium ion batteries prepared in Examples 13 to 15 are carried out, and the test results are shown in Table 3-2.

**Table 3-2**

| | Number of cycle (dropping to 80% capacity) at room temperature | Number of cycle (dropping to 80% capacity) at high temperature | Initial DCR /mOhm | Capacity retention rate after storage at 60°C for 30 days/% |
|---|---|---|---|---|
| Example 13 | 1031 | 987 | 92 | 89 |
| Example 14 | 1510 | 1039 | 94 | 92 |
| Example 15 | 1791 | 1444 | 96 | 93 |

Based on the data in Table 3-2, it can be seen that the negative electrode of the disclosure adopts graphite, the positive electrode adopts nano lithium iron phosphate, and the Dv50 particle size of the nano lithium iron phosphate is 0.8 µm to 2.5 µm, so that the synergistic effect between the compound in the electrolyte and the electrode sheet may be better realized. Therefore, the lithium battery has better high-temperature cycle performance, room-temperature cycle performance, high-temperature storage performance, and lower internal resistance.

### Example 16

The negative electrode materials of this example and Example 3 are both graphite, and the only difference between the example and Example 3 is that the porosity of graphite in this example is 20%, and the porosity of graphite in Example 3 is 30%. The positive electrode, electrolyte composition and other compositions are the same as those in Example 3.

### Example 17

The negative electrode materials of this example and Example 3 are both graphite, and the only difference between the example and Example 3 is that the porosity of graphite in this example is 40%. The positive electrode, electrolyte composition and other compositions are the same as those in Example 3.

The performance tests of the lithium ion batteries prepared in Examples 16 to 17 are carried out, and the test results are shown in Table 4.

**Table 4**

| | Number of cycle (dropping to 80% capacity) at room temperature | Number of cycle (dropping to 80% capacity) at high temperature | Initial DCR /mOhm | Capacity retention rate after storage at 60°C for 30 days/% |
|---|---|---|---|---|
| Example 16 | 1033 | 989 | 113 | 94 |
| Example 3 | 1826 | 1607 | 99 | 96 |
| Example 17 | 1749 | 1449 | 99 | 92 |

As can be seen from the data in Table 4, graphite is used as the negative electrode of the present disclosure. When the porosity of the graphite material is 20% to 40%, the number of cycle (dropping to 80% capacity) at room temperature is 1033 to 1826, and the number of cycle (dropping to 80% capacity) at high temperature is 989 to 1607. The initial DCR is 99 mOhm to 113 mOhm, and the capacity retention rate after storage at 60°C for 30 days is 92% to 96%. In particular, when the porosity of the graphite material is 30% to 40%, the number of cycle (reaching 80% capacity) at room temperature is 1749 to 1826, and the number of cycle (reaching 80% capacity) at high temperature is 1449 to 1607. It can be seen that the addition of the compound represented by formula (I) in the electrolyte and the control of the porosity of the graphite material may better realize the synergistic effect between the compound in the electrolyte and the electrode sheet. In this manner, it is possible for the lithium batteries to have better high-temperature cycle performance, room-temperature cycle performance, high-temperature storage performance, and lower internal resistance.

The electrolyte compositions of Examples 18 to 19 and Comparative Examples 2 to 3 are shown in Table 5-1. Lithium ion batteries are prepared through the above preparation method, and performance of batteries is tested. The test results are shown in Table 5-2.

**Table 5-1**

| | Positive electrode | Negative electrode | Electrolyte (wt%) | | | | | | | | |
|---|---|---|---|---|---|---|---|---|---|---|---|
| | | | LiPF₆ (wt%) | Non-aqueous solvent (wt%) | Compound 1 | Compound 2 | Compound 4 | FEC | PS | DTD | VC |
| Example 3 | LFP | Graphite | 14 | 82.5 | 1 | - | - | 0.5 | - | - | 2 |
| Comparative Example 2 | 811 | Graphite | 14 | 82.5 | 1 | - | - | 0.5 | - | - | 2 |
| Comparative Example 3 | 811 | Graphite | 14 | 83.5 | - | - | - | - | 1 | 1 | 0.5 |
| Example 18 | 811 | Graphite | 14 | 82 | - | - | 1.5 | - | 1 | 1 | 0.5 |
| Example 19 | 811 | Graphite | 14 | 82 | 0.5 | 0.5 | 0.5 | - | 1 | 1 | 0.5 |

**Table 5-2**

| | Number of cycle (dropping to 80% capacity) at room temperature | Number of cycle (dropping to 80% capacity) at high temperature | Initial DCR /mOhm | Capacity retention rate after storage at 60°C for 30 days/% |
|---|---|---|---|---|
| Example 3 | 1826 | 1607 | 99 | 96 |
| Comparative Example 2 | 1112 | 986 | 94 | 93 |
| Comparative Example 3 | 891 | 747 | 105 | 92 |
| Example 18 | 1454 | 1352 | 91 | 98 |
| Example 19 | 1611 | 1503 | 92 | 97 |

As can be seen from the data in Table 5-2, as compared with Comparative Example 3 where the compound represented by formula (I) is not added, since the electrolyte in Examples 18 and 19 of the present disclosure is added with the compound represented by formula (I), the copolymerization of the negative electrode film-forming additive is improved to achieve the effects of improving the protection of the negative electrode and improving the internal resistance. The electrochemical device made of the electrolyte of the present disclosure has excellent high-temperature cycle performance and room-temperature cycle performance, and has low internal resistance simultaneously.

### Example 20

The difference between this example and Example 18 is that the porosity of the positive electrode material is different. The porosity of 811 in this example is 20%, the porosity of 811 in Example 18 is 28%, and the rest have the same porosity as in Example 18.

### Example 21

The difference between this example and Example 18 is that the porosity of the positive electrode material is different. The porosity of 811 in this example is 35%, the porosity of 811 in Example 18 is 28%, and the rest have the same porosity as in Example 18.

The performance of the lithium ion batteries prepared in Examples 20 to 21 is tested, and the test results are shown in Table 6.

**Table 6**

| | Number of cycle (dropping to 80% capacity) at room temperature | Number of cycle (dropping to 80% capacity) at high temperature | Initial DCR /mOhm | Capacity retention rate after storage at 60°C for 30 days/% |
|---|---|---|---|---|
| Example 20 | 1337 | 984 | 94 | 95 |
| Example 18 | 1454 | 1352 | 91 | 98 |
| Example 21 | 833 | 940 | 103 | 88 |

It can be seen from the data in Table 6 that the positive electrode of this disclosure adopts 811, and the porosity of the positive electrode is controlled within 20% to 35%, so that the synergistic effect between the compound in the electrolyte and the electrode sheet may be better realized. Therefore, the lithium battery has better high-temperature cycle performance, room-temperature cycle performance, high-temperature storage performance, and lower internal resistance. More preferably, the porosity of the positive electrode is controlled within 20% to 28%.

The electrolyte compositions of Example 22, Comparative Example 4, and Examples 23 to 24 are shown in Table 7-1. The lithium ion battery is prepared through the above preparation method, and performance of the lithium ion battery is tested. The test results are shown in Table 7-2.

**Table 7-1**

| | Positive electrode | Negative electrode | Electrolyte (wt%) | | | | | | | | | | |
|---|---|---|---|---|---|---|---|---|---|---|---|---|---|
| | | | LiPF₆ (wt%) | Non-aqueous solvent (wt%) | Compou nd 1 | Compou nd 2 | Compou nd 3 | Compou nd 4 | Compou nd 5 | FEC | PS | DTD | VC |
| Example 18 | 811 | Graphite | 14 | 82.0 | - | - | - | 1.5 | - | - | 1 | 1 | 0.5 |
| Example 22 | 811 | silicon carbon | 14 | 82.0 | - | - | - | 1.5 | - | - | 1 | 1 | 0.5 |
| Comparat ive Example 4 | 811 | silicon carbon | 14 | 71.5 | -- | - | - | - | - | 12 | 1 | 1 | 0.5 |
| Example 23 | 811 | silicon carbon | 14 | 70.0 | - | - | 1.5 | - | - | 12 | 1 | 1 | 0.5 |
| Example 24 | 811 | silicon carbon | 14 | 69.5 | 0.5 | 0.5 | - | 0.5 | 0.5 | 12 | 1 | 1 | 0.5 |

**Table 7-2**

| | Number of cycle (dropping to 80% capacity) at room temperature | Number of cycle (dropping to 80% capacity) at high temperature | Initial DCR /mOhm | Capacity retention rate after storage at 60°C for 30 days/% | Energy density (Wh/kg) |
|---|---|---|---|---|---|
| Example 18 | 1454 | 1352 | 91 | 98 | 275 |
| Example 22 | 552 | 356 | 127 | 66 | 309 |
| Comparative Example 4 | 833 | 699 | 120 | 80 | 310 |
| Example 23 | 1014 | 795 | 101 | 89 | 313 |
| Example 24 | 1078 | 912 | 104 | 91 | 320 |

Based on the data in Table 7-2, it can be seen that 811 is adopted for the positive electrode, and carbon silicon is adopted for the negative electrode. As compared with Comparative Example 4 where the compound represented by formula (I) is not added, since the electrolyte in Examples 23 and 24 of the present disclosure is added with the compound represented by formula (I), the copolymerization of the negative electrode film-forming additive is solved to achieve the effects of improving negative electrode film formation and improving the internal resistance. The electrochemical device made of the electrolyte of the present disclosure has excellent high-temperature cycle performance and room-temperature cycle performance, and has low internal resistance simultaneously.

Compared with the use of graphite as the negative electrode in Example 18, the carbon-silicon system is adopted as the negative electrode in Examples 22 to 24. After adding the compound represented by the formula (I), the achieved synergistic effect helps to improve the capacity performance of the battery, further improve the energy density, and further facilitates to satisfy the requirement for room-temperature cycle performance and high-temperature cycle performance of the battery.

### Example 25

The difference between this example and Example 24 is that the content of SiOₓ in the silicon carbon is different, where the content of SiOₓ in the carbon silicon in Example 25 is 1%, the content of SiOₓ in the carbon silicon in Example 24 is 10%, and the rest have the same SiOₓ content as in Example 24. Example 26 is tested for its performance.

The difference between this example and Example 24 is that the content of SiOₓ in the carbon silicon is 5%, and the rest have the same SiOₓ content as in Example 24.

### Example 27

The difference between this example and Example 24 is that the content of SiOₓ in the carbon silicon is 15%, and the rest have the same SiOₓ content as in Example 24.

### Example 28

The difference between this example and Example 24 is that the content of SiOₓ in the carbon silicon is 20%, and the rest have the same SiOₓ content as in Example 24.

In Examples 24 to 28, lithium ion batteries are prepared through the above preparation method, and the battery performance is tested. The test results are shown in Table 8.

**Table 8**

| | Number of cycle (dropping to 80% capacity) at room temperature | Number of cycle (dropping to 80% capacity) at high temperature | Initial DCR /mOhm | Capacity retention rate after storage at 60°C for 30 days/% | Energy density (Wh/kg) |
|---|---|---|---|---|---|
| Example 25 | 1312 | 1004 | 99 | 94 | 289 |
| Example 26 | 1273 | 990 | 102 | 93 | 305 |
| Example 24 | 1078 | 912 | 104 | 91 | 320 |
| Example 27 | 977 | 903 | 112 | 85 | 325 |
| Example 28 | 953 | 886 | 128 | 80 | 330 |

It can be seen from the data in Table 8 that when carbon silicon is adopted as the negative electrode, the content of SiOₓ is between 1 and 20%, so that the synergistic effect between the compound in the electrolyte and the electrode sheet may be better realized. Therefore, the lithium battery has better high-temperature cycle performance, room-temperature cycle performance, and high-temperature storage performance while the energy density is significantly increased, thereby satisfying the application where high energy density and low cycle are required.

### Comparative Example 5

The only difference between Comparative Example 5 and Example 3 lies in the content of HF. The content of HF in Comparative Example 5 is 5000 ppm, and the content of HF in Example 3 is 100 ppm.

In Comparative Example 5, the lithium ion battery is prepared through the above preparation method, and its performance is tested. The test results are shown in Table 9.

**Table 9**

| | Number of cycle (dropping to 80% capacity) at room temperature | Number of cycle (dropping to 80% capacity) at high temperature | Initial DCR /mOhm | Capacity retention rate after storage at 60°C for 30 days/% |
|---|---|---|---|---|
| Example 3 | 1826 | 1607 | 99 | 96 |
| Comparative Example 5 | 431 | 266 | 122 | 53 |

As can be seen from the data in Table 9, in Comparative Example 5, when the content of HF in the electrolyte is too high, the number of cycle (dropping to 80% capacity) at room temperature is reduced from 1826 to 431 in Example 3, and the number of cycle (dropping to 80% capacity) at high temperature is reduced from 1607 to 266 in Example 3. The initial DCR is changed from 99 mOhm to 122 mOhm in Example 3, and the capacity retention rate after storage of 30 days at 60°C is decreased from 96% to 53% in Example 3, and the overall performance of the battery is considerably reduced.

The present disclosure illustrates the detailed process equipment and process flow of the present disclosure through the above-mentioned embodiments, but the present disclosure is not limited to the above-mentioned detailed process equipment and process flow, that is, it does not mean that the present disclosure must rely on the above-mentioned detailed process equipment and process flow for implementation. Those skilled in the art should understand that any improvement to the disclosure, equivalent replacement of various raw materials of the product of the disclosure, addition of auxiliary components, and selection of specific methods, etc., all fall within the scope to be protected by the disclosure of the disclosure.

The preferred embodiments of the present disclosure have been described in detail above. However, the present disclosure is not limited to the specific details of the above-mentioned embodiments. Within the scope of the technical concept of the present disclosure, various simple modifications can be made to the technical solutions of the present disclosure. These simple modifications all belong to the scope to be protected by the disclosure.

In addition, it should be noted that the specific technical features described in the above-mentioned specific embodiments can be combined in any suitable manner if they are not in conflict with each other. To avoid unnecessary repetition, various possible combinations are not described in this disclosure.

In addition, the various embodiments of the present disclosure can also be combined freely, as long as they do not violate the concept of the present disclosure, and such combination should also be regarded as the content disclosed in the present disclosure.

## Claims

1. An electrolyte, comprising a compound represented by formula (I): 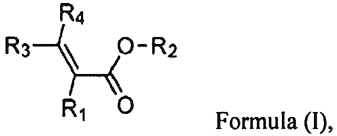 wherein R₁, R₃, and R₄ are each independently selected from hydrogen, a cyano group, a substituted or unsubstituted C₁₋₁₂ hydrocarbon group, a substituted or unsubstituted C₁₋₁₂ carboxy group, a substituted or unsubstituted C₆₋₂₆ aryl group, a substituted or unsubstituted C₂₋₁₂ amide group, a substituted or unsubstituted C₀₋₁₂ phosphate group, a substituted or unsubstituted C₀₋₁₂ sulfonyl group, a substituted or unsubstituted C₀₋₁₂ siloxy group or a substituted or unsubstituted C₀₋₁₂ boronate group, when being substituted, a substituent comprises a halogen atom; R₂ is selected from the substituted or unsubstituted C₁₋₁₂ hydrocarbon group, the substituted or unsubstituted C₁₋₁₂ carboxy group, the substituted or unsubstituted C₆₋₂₆ aryl group, the substituted or unsubstituted C₂₋₁₂ amide group, the substituted or unsubstituted C₀₋₁₂ phosphate group, the substituted or unsubstituted C₀₋₁₂ sulfonyl group, the substituted or unsubstituted C₀₋₁₂ siloxy group or the substituted or unsubstituted C₀₋₁₂ boronate group, when being substituted, the substituent comprises the halogen atom.

2. The electrolyte according to claim 1, wherein a mass content of the compound represented by the formula (I) is 0.1% to 5% based on a mass of the electrolyte.

3. The electrolyte according to claim 2, wherein the mass content of the compound represented by the formula (I) is 0.3% to 3% based on the mass of the electrolyte.

4. The electrolyte according to any one of claims 1-3, wherein R₁, R₃, and R₄ are each independently selected from hydrogen, and a substituted or unsubstituted C₁₋₁₂ hydrocarbon group; R₂ is selected from the substituted or unsubstituted C₁₋₁₂ hydrocarbon group, when being substituted, a substituent comprises a halogen atom.

5. The electrolyte according to any one of claims 1-3, wherein the compound represented by the formula (I) is any one or a mixture of two or more of dimethyl fumarate, methyl methacrylate, dimethyl maleate, 1,1,1,3,3,3-hexafluoroisopropyl methacrylate, and vinyl methacrylate.

6. The electrolyte according to any one of claims 1-3, wherein the electrolyte is chemically formed in an environment with a temperature of 45°C and a hot-pressing pressure of 0.1 MPa to generate HF, a mass content of the generated HF is 20 ppm to 800 ppm based on a mass of the electrolyte after the formation.

7. An electrochemical device, comprising a negative electrode, a positive electrode and the electrolyte as claimed in any one of claims 1 to 6.

8. The electrochemical device according to claim 7, wherein the negative electrode comprises a negative electrode active material and a current collector, and the negative electrode active material comprises a graphite or a silicon carbon negative electrode active material;
the silicon carbon negative electrode active material is selected from any one or a mixture of two or more of silicon, silicon oxide compounds and silicon-based alloys.

9. The electrochemical device according to claim 8, wherein the negative electrode has a porosity of 20% to 40%.

10. The electrochemical device according to any one of claims 7-9, wherein the positive electrode comprises a positive electrode active material; the positive electrode active material is selected from any one or a mixture of two or more of lithium iron phosphate, a lithium-nickel transition metal composite oxide, and a lithium-nickel-manganese composite oxide having a spinel structure.

11. The electrochemical device according to claim 10, wherein the positive electrode has a porosity of 20% to 35%.

12. The electrochemical device according to claim 11, wherein the lithium iron phosphate is nanolithium iron phosphate or lithium iron phosphate secondary sphere;
a Dv50 particle size of the nanolithium iron phosphate is 0.8 to 2.5 µm;
a Dv50 particle size of the lithium iron phosphate secondary sphere is 7 to 11 µm.

13. An electronic device, comprising the electrochemical device as claimed in any one of claims 7 to 12.
